# EUROPEAN PATENT APPLICATION

(11) **EP 4 488 081 A1**
(43) Date of publication of application: **08.01.2025**
(21) Application number: 24185832.3
(22) Date of filing: 01.07.2024
(51) Int. Cl.: B60F 1/04, B61F 7/00

(54) **A WHEEL MOUNT AND A VEHICLE**

(30) Priority: 04.07.2023 GB 202310226
(71) Applicant: Harmill Systems Limited, Leighton Buzzard Bedfordshire LU7 4UH (GB)
(72) Inventor: Hughes, Patrick, LU7 4UH Leighton Buzzard (GB); Hughes, Philip, LU7 4UH Leighton Buzzard (GB); Hughes, Simon, LU7 4UH Leighton Buzzard (GB)
(74) Representative: ip21 Ltd

(57) **Abstract**

A wheel mount (11) for a road-rail vehicle is configured to move one or more wheel (21-22) between a stowed arrangement and a deployed arrangement. The wheel mount (11) comprises one or more lateral guide (31-32) configured to guide the one or more wheel (21-22) laterally. Each lateral guide (31-32) is offset from an axis of rotation of the wheel (21-22). The wheel mount (11) further comprises one or more vertical guide (40) configured to guide the one or more wheel (21-22) vertically. A vehicle is installed with a number of wheel mounts.

## Description

### Technical Field

This disclosure relates to a wheel mount and a vehicle. In particular, this disclosure relates to a wheel mount which can move one or more wheel between a stowed arrangement and a deployed arrangement. A vehicle is disclosed which is installed with one or more wheel mount.

### Background

There is a demand for vehicles which are capable of being driven on road surfaces as well as on railway tracks. This can be achieved by arranging the vehicle to have road wheels as well as track wheels, together with a mechanism which facilitates the changing between a road mode and a track mode. Providing vehicles that are configured to be used in both track and road environments enhances their versatility, making it easier for the vehicle to travel to the location where it is to be used, and meaning that costs can be reduced by avoiding the need for dedicated track vehicles and road vehicles.

A MEWP (mobile elevating work platform) is an example of a vehicle which can be configured to be used on both road surfaces and railway tracks. MEWPs typically have a large wheel base, which supports a platform which can be used to elevate workers, tools and materials, to a height at which work is to be performed. This functionality is useful for allowing the workers to access rail infrastructure such as overhead cables, which can be achieved from the track when the vehicle is in the track mode, or from a road which runs alongside the track when the vehicle is in the road mode. Such MEWPs typically have a set of track wheels and a set of road wheels, together with a mechanism for raising and lowering the track wheels.

The MEWP can be driven on a road surface using the road wheels. Incorporating a set of road wheels allows the MEWP to be transported by road to the railway track where it is to be used, without it having to be transported by truck. The mechanism can be used to lower the track wheels, and raise the road wheels, thus allowing the MEWP to be driven on the railway track.

Such vehicles are wide, so are often unsuitable for use on most roads, unless public access has been restricted, which causes disruption and delays. Private roads, such as roads that can typically be found at train depots, are often made wide enough to accommodate the use of wide road vehicles. However, this relies on a large amount of space being devoted to this road infrastructure. As a consequence, there is a demand for a vehicle that is narrow in width, which can used on both roads and tracks.

### Summary

Aspects of the present invention are set out by the claims. Further aspects are also described.

As a first aspect, there is provided a wheel mount (11; 12) for a road-rail vehicle (100). The wheel mount (11; 12) is configured to move one or more wheel (21, 22; 23, 24) between a stowed arrangement and a deployed arrangement. The wheel mount (11; 12) comprises one or more lateral guide (31, 32) configured to guide the one or more wheel (21, 22; 23, 24) laterally. Each lateral guide (31, 32) is offset from an axis of rotation of the wheel (21, 22; 23, 24). The wheel mount (11; 12) further comprises one or more vertical guide (40) configured to guide the one or more wheel (21, 22; 23, 24) vertically.
- Advantageously, the wheel mount can be used to provide a vehicle that can be configured in either a road mode or a rail mode (track mode).
- The wheel mount accommodates a number of wheels, such as track wheels (21, 22; 23, 24). The wheel mount can be attached to a vehicle (100) for use. The lateral guides (31, 32) allow the wheels to be moved laterally with respect to the vehicle (100). The vertical guide (40) allows the wheels to be moved vertically with respect to the vehicle.
- To move from the road mode to the rail mode, the wheel mount moves the track wheels (21, 22; 23, 24) from the stowed arrangement to the deployed arrangement (S10). The track wheels are moved laterally (S12) from a retracted position to an extended position. Then, the track wheels are moved vertically (S13) from a raised position to a lowered position, with the road wheels (121-124) of the vehicle being raised above the track.
- To move from the rail mode to the road mode, the wheel mount moves the track wheels (21, 22; 23, 24) from the deployed arrangement to the stowed arrangement (S20). The track wheels are moved vertically (S23) from a lowered position to a raised position, with the road wheels (121-124) of the vehicle being lowered onto the road surface. Then, the track wheels are moved laterally (S12) from an extended position to a raised position.
- A consequence of including the lateral guides is that the track wheels (21, 22; 23, 24) can be stowed in a retracted configuration. This ensures that the vehicle 100 has a narrow width when in the road mode.

Optionally, the wheel mount (11; 12) is configured to move a first wheel (21; 23) and a second wheel (22; 24) between the stowed arrangement and the deployed arrangement.
- The wheel mount can accommodate two wheels.
- The vehicle can be installed with a pair of wheels by attaching one wheel mount.
- The vehicle may be installed with a front wheel mount and a rear wheel mount, to provide four wheels which can be moved between a stowed arrangement and a deployed arrangement.

Optionally, the wheel mount (11; 12) further comprises a first lateral guide (31) configured to guide the first wheel (21; 23) laterally, and a second lateral guide (32) configured to guide the second wheel (22; 24) laterally.
- The two wheels can each be moved into position by the wheel guide.
- The pair of wheels can be stowed in the retracted position, to provide a road vehicle that is narrow in width.
- The pair of wheels can be deployed in the extended position, to provide a rail vehicle with the wheels separated by a width corresponding to the separation of the train tracks.

Optionally, a single vertical guide (40) is configured to guide both the first wheel (21; 23) and the second wheel (22; 24).
- Advantageously, both of the wheels can be raised and lowered at the same time.
- This ensures that both of wheels maintain the same height level.
- This simplifies the raising and lowering of the wheels, and prevents the vehicle from leaning to the left or right as the height of the wheels is changed.

Optionally, the wheel mount (11; 12) further comprises one or more lateral actuator (33, 34) configured to move the one or more wheel (21, 22) between a retracted arrangement and an extended arrangement.
- Advantageously, the lateral actuators can move the wheels into position, via the lateral guides.
- When deploying the wheels, the lateral actuators are used to move the wheels into the extended position.
- When stowing the wheels, the lateral actuators are used to move the wheels into the retracted position.

Optionally, the wheel mount (11; 12) further comprises one or more vertical actuator (45) configured to move the one or more wheel (21, 22) between a raised arrangement and a lowered arrangement.
- Advantageously, the vertical actuators can move the wheels into position, via the vertical guides.
- When deploying the wheels, the vertical actuators are used to move the wheels into the lowered position.
- When stowing the wheels, the vertical actuators are used to move the wheels into the raised position.

Optionally, the wheel mount (11) further comprises a support (51, 52) configured to be installed with a drive motor (53, 54) which during use supplies the wheel (21, 22) with rotational energy. The support (51, 52) may be configured to be installed with the drive motor (53, 54) on the inside surface of the wheel (21, 22) along its axis of rotation.
- Advantageously, a drive motor can be installed, which can be activated when the wheels are in the deployed position, and deactivated when the wheels are in the stowed position.
- The drive motors can supply the wheels with rotational energy, by providing the wheels with torque during use. The drive motors can apply torque directly to the wheel, or via an axle.
- Installing the drive motor non the inside surface of the wheel along its axis of rotation ensures that the drive train of the wheel mount is compact.

Optionally, the wheel mount (11) further comprises an input / output device (70) configured to receive a signal to control operation of an actuator (33, 34, 45) or a drive motor (53, 54) which has been installed to the wheel mount (11).
- Advantageously, a signal can be transmitted from the vehicle to the wheel mounts.
- A user of the vehicle can operate the actuators of the wheel mounts, to stow or deploy the wheels.
- A user of the vehicle can operate the drive motors of the wheel mounts, to drive the wheels.

Optionally, the one or more lateral guide (31, 32) is calibrated to guide the one or more wheel (21, 22; 23, 24) to one or more selected gauge width.
- Advantageously, the lateral guides are calibrated so that the wheels when in the extended position have a separation that corresponds to the separation between the railway lines.
- The wheel mount may be configured so that the track wheels (21, 22; 23, 24) can be used on different gauges of railway lines.

Optionally, the wheel mount (11; 12) is configured to be retrofitted to a vehicle (100).
- Advantageously, a road vehicle can be modified by attaching a number of wheel mounts, so that the vehicle can be driven on either in a road mode or a track mode.

The wheel mount (11; 12) is typically configured to be mounted with one or more rail wheel (21, 22; 23, 24), wherein when in the stowed arrangement the separation of two rail wheels (21, 22; 23, 24) is narrower than the separation of two road wheels (121, 122) of the vehicle (100).
- Advantageously, the vehicle 100 has a narrow width when in the road mode. When travelling using the road wheels, the vehicle has a compact width that is suitable for typical roads. When travelling using the rail wheels, the separation of the rail wheels corresponds to the separation of the rails.

As a second aspect, there is provided a vehicle (100) comprising one or more wheel mount (11; 12) according to the first aspect.
- A road vehicle that is installed with a number of road wheels can be configured to also serve as a track vehicle by installing a number of track wheels.
- Each wheel mount serves as a mechanism for stowing or deploying the track wheels, which allows the vehicle to be used in either a road mode or a rail mode.
- As an example, the vehicle may be a mobile elevating work platform (MEWP).

Optionally, the vehicle (100) further comprises a first wheel mount (11) at the front of the vehicle, and a second wheel mount (12) at the rear of the vehicle.
- A pair of wheels is provided by each wheel mount. The separation of each pair of wheels is calibrated to correspond to the gauge of the railway tracks.
- The vehicle can be installed with front track wheels and rear track wheels, independent of the length of the vehicle. Thus, the track wheels are suitable for vehicles that have a variety of lengths.
- The front track wheels are installed in front of the front road wheels, and the rear track wheels are installed behind the rear road wheels.
- When the vehicle is in road mode, the track wheels can be stowed at the front and rear of the vehicle.
- When the vehicle is in rail mode, the track wheels can be deployed onto the track, with the vehicle's road wheels being raised.

Optionally, the vehicle (100) further comprises a controller (125, 145) configured to control operation of the one or more wheel mount (11; 12).
- The controller receives instructions from the user to operate the wheel mount.
- Instructions from the user to deploy the track wheels, cause the lateral actuators to extend the track wheels, and the vertical actuators to lower the track wheels.
- Instructions from the user to stow the track wheels, cause the vertical actuators to raise the track wheels, and the lateral actuators to retract the track wheels.
- Instructions from the user to drive the track wheels, cause the drive motors to provide the track wheels with torque.

As a third aspect, there is provided a method (S10; S20) of controlling a wheel mount (11; 12) for a road-rail vehicle (100). The method (S10; S20) is configured to move one or more wheel (21, 22; 23, 24) between a stowed arrangement and a deployed arrangement. The method (S10; S20) comprises laterally guiding (S12; S24) the one or more wheel (21, 22; 23, 24), via one or more lateral guide (31, 32). Each lateral guide (31, 32) is offset from an axis of rotation of the wheel (21, 22; 23, 24). The method (S10; S20) further comprises vertically guiding (S13; S23) the one or more wheel (21, 22; 23, 24), via one or more vertical guide (40).
- To deploy a wheel (21, 22; 23, 24) that is stowed, it is laterally guided (S12) via a lateral guide (31, 32), and then vertically guided (S13) via a vertical guide (40).
- To stow a wheel (21, 22; 23, 24) that is deployed, it is vertically guided (S23) via a vertical guide (40), and then laterally guided (S24) via a lateral guide (31, 32).

As a fourth aspect, there is provided a program, which when executed by a computer, causes the computer to control a wheel mount (11; 12) according to the third aspect.
- The controller (125, 145) can control operation of the wheel mount (11; 12).

As a fifth aspect, there is provided a computer-readable storage medium storing a program according to the fourth aspect.
- The controller (125, 145) is installed with software which can be used to control operation of the wheel mount (11; 12).

### Brief Description of the Drawings

Embodiments will now be described, by way of example only, with reference to the accompanying drawings, in which:
- FIGs. 1A & 1B provide perspective views of a wheel mount that holds a set of track wheels, with FIG. 1A showing the wheel mount arranged in a road mode, and FIG. 1B showing the wheel mount arranged in a rail mode;
- FIGs. 2A & 2B are flowcharts illustrating how the wheel mount can be converted between the road mode and the rail mode;
- FIGs. 3-7 illustrate a vehicle installed with wheel mounts;
- FIGs. 3A & 3B provide perspective views of the vehicle, with FIG. 3A showing the track wheels arranged in the road mode, and FIG. 3B showing the track wheels arranged in the rail mode;
- FIGs. 4A & 4B provide side views of the vehicle, with FIG. 4A showing the track wheels arranged in the road mode, and FIG. 4B showing the track wheels arranged in the rail mode;
- FIG. 5 provides a cross section view of the vehicle, shown through the line labelled "D---D" in FIG. 4B;
- FIGs. 6A & 6B provide front views of the vehicle, with FIG. 6A showing the track wheels arranged in the road mode, and FIG. 6B showing the track wheels arranged in the rail mode;
- FIG. 7 provides a top view of the vehicle, showing the track wheels arranged in the road mode; and
- FIG. 8 illustrates connections between electronic components of the vehicle and wheel mounts.

### Detailed Description

Various exemplary embodiments, features, and aspects are described in detail below with reference to the drawings. A wheel mount is disclosed, which is configured to be installed with wheels and attached to a vehicle.

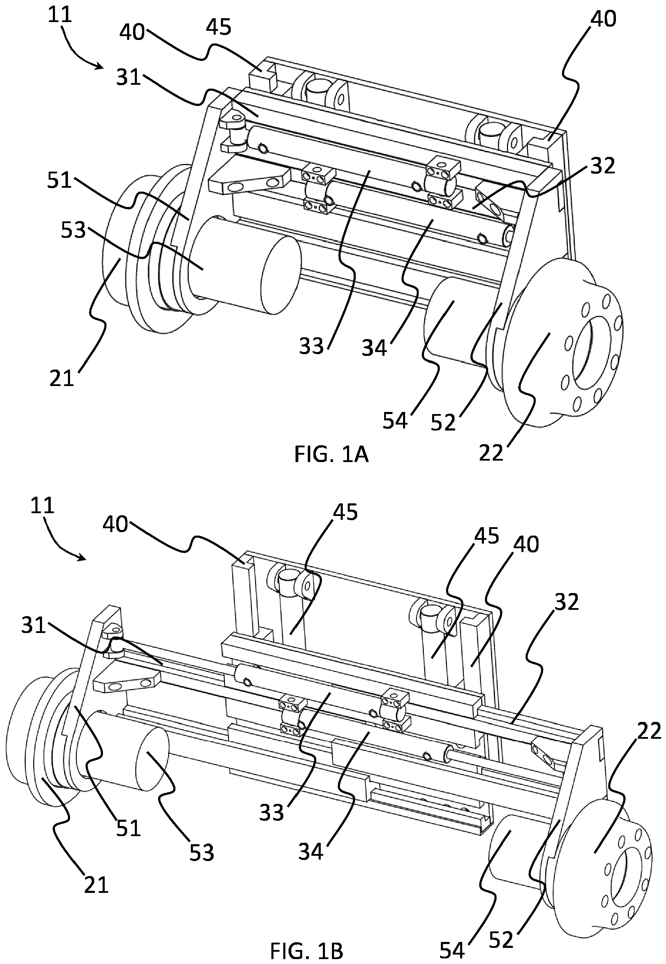

FIGs. 1A & 1B illustrate a wheel mount 11 installed with a set of wheels (21, 22). FIG. 1A shows the wheel mount 11 in a road mode, with the wheels (21, 22) raised and retracted to provide a stowed arrangement. FIG. 1B shows the wheel mount 11 in a rail mode (track mode), with the wheels (21, 22) extended and lowered to provide a deployed arrangement.

The wheels shown are track wheels, which when deployed can be used on a railway track. The wheel mount 11 is shown installed with a pair of wheels (21, 22), with these two wheels being configured to be deployed on opposite rails of the railway track. The wheel mount 11 is configured to be attached to a vehicle, with the number of wheel mounts 11 corresponding to the number of pairs of wheels (21, 22) that are to be installed as part of the vehicle.

The wheel mount 11 includes a first lateral guide 31 configured to guide a first wheel 21 between a retracted arrangement and an extended arrangement, a second lateral guide 32 configured to guide a second wheel 22 between a retracted arrangement and an extended arrangement, and a vertical guide 40 configured to guide both wheels (21, 22) between a raised arrangement and a lowered arrangement.

The guides (31, 32, 40) are provide by sliders which are received by a corresponding runners. The sliders for the lateral guides (31, 32) have a T-shaped cross section, which allows relative lateral movement, while restricting any rotation or translation in other directions. The vertical guide 40 is provided by two attachments which are provided at either side of the mount 11, which allow vertical movement, while restricting any rotation or translation in other directions. For the illustrated wheel mount 11, a single vertical guide 40 is configured to raise and lower two wheels (21, 22), rather than providing separate vertical guides for each of the wheels.

The wheel mount 11 includes a first lateral actuator 33 configured to move the first wheel 21 between the retracted arrangement and the extended arrangement, a second lateral actuator 34 configured to move the second wheel 22 between the retracted arrangement and the extended arrangement, and a vertical actuator 45 configured to move both wheels (21, 22) between the raised arrangement and the lowered arrangement. The wheel mount 11 is illustrated with hydraulic devices (33, 34, 45) which serve as the lateral actuators and the vertical actuator. Alternatively, an electric screw device may serve as an actuator.

The wheel mount 11 further includes supports (51, 52) configured to be installed with drive motors (53, 54). Once installed, the drive motors (53, 54) can supply the wheels (21, 22) with rotational energy during use. The installation of drive motors (53, 54) is not essential, because it is possible for the wheels (21, 22) to rotate passively, with the vehicle receiving drive in another way. The vehicle may be installed with several wheel mounts (11, 12), with only some of the wheel mounts 11 including drive motors (53, 54), whereas other wheel mounts 12 do not include drive motors.

It isn't essential for the wheel mount 11 to include two wheels. Disclosure is provided of a wheel mount 11 that is configured to be installed with only one wheel 21. In this case, for each pair of wheels, a pair of wheel mounts may be attached to the vehicle. Thus, for this alternative arrangement, the number of wheel mounts corresponds to the number of wheels that are to be installed. To achieve this alternative arrangement, the wheel mount 11 includes a single lateral guide 31 configured to guide the wheel 21 between a retracted arrangement and an extended arrangement, and a vertical guide 40 configured to guide the wheel 21 between a raised arrangement and a lowered arrangement. Such a wheel mount 11 includes a single lateral actuator 33 configured to move the wheel 21 between the retracted arrangement and the extended arrangement, and a vertical actuator 45 configured to move the wheel 21 between the raised arrangement and the lowered arrangement. As a further alternative, the wheel mount may be configured to be installed with four wheels, with the wheel mount providing a pair of front wheels and a pair of rear wheels.

The wheel mount 11 is configured to be retrofitted to a vehicle. This can be achieved by bolting the mount to a chassis of the vehicle.

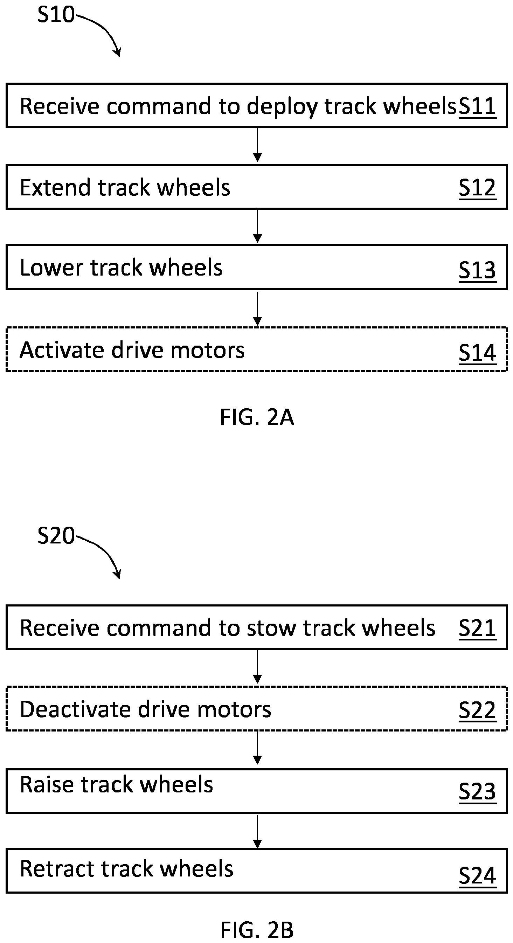

FIGs. 2A & 2B illustrate how the wheel mount 11 can change between the road mode and the rail mode. This is achieved by moving the track wheels between a stowed arrangement and a deployed arrangement. The disclosed processes (S10; S20) for operating the wheel mounts can be implemented by software which is installed by a vehicle controller.

FIG. 2A describes a process S10 for changing the wheel mount 11 from the road mode (FIG. 1A) to the rail mode (FIG. 1B). In step S11, the wheel mount 11 receives a command from the vehicle to deploy the track wheels (21, 22). In step S12, the lateral actuators (33, 34) extend the wheels (21, 22) along the lateral guides (31, 32), from the retracted position to the extended position. As a consequence, the separation of the wheels increases so that each wheel is positioned above the tracks of the railway line. In step S13, the vertical actuator 45 lowers the wheels (21, 22) along the vertical guide 40, from the raised position to the lowered position. As a consequence, the track wheels are lowered onto the tracks, and the road wheels are raised above the road surface. In step S14, the drive motors (53, 54) are activated, so that they can provide a torque to the wheels (21, 22). (Note that step S14 is not essential, because the drive motors may not be present).

FIG. 2B describes a process S20 for changing the wheel mount 11 from the rail mode (FIG. 1B) to the road mode (FIG. 1A). In step S21, the wheel mount 11 receives a command from the vehicle to stow the track wheels (21, 22). In step S22, the drive motors (53, 54) are deactivated, so that they can provide a torque to the wheels (21, 22). (Note that step S22 is not essential, because the drive motors may not be present). In step S23, the vertical actuator 45 raises the wheels (21, 22) along the vertical guide 40, from the lowered position to the raised position. As a consequence, the track wheels are raised above the track, and the road wheels are lowered onto the road surface. In step S24, the lateral actuators (33, 34) retract the wheels (21, 22) along the lateral guides (31, 32), from the extended position to the retracted position. As a consequence, the separation of the wheels decreases, so that the width of the vehicle is reduced.

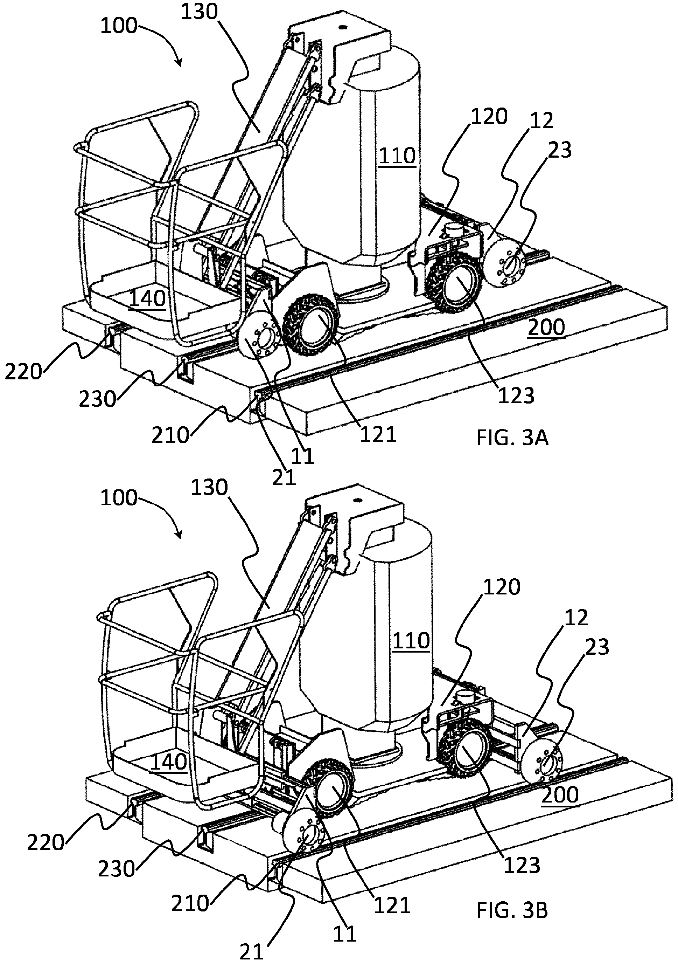

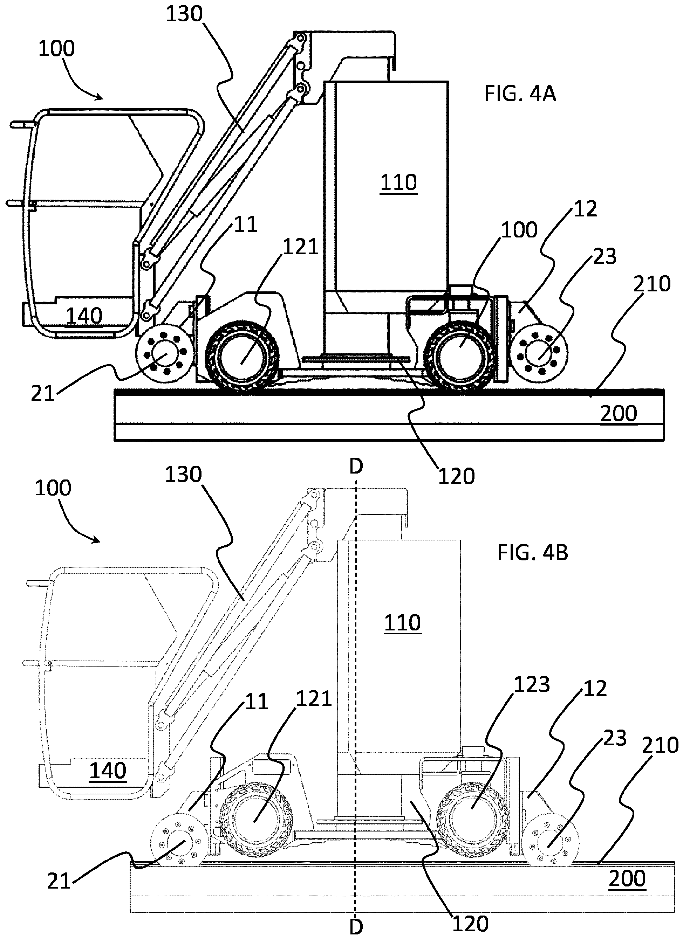

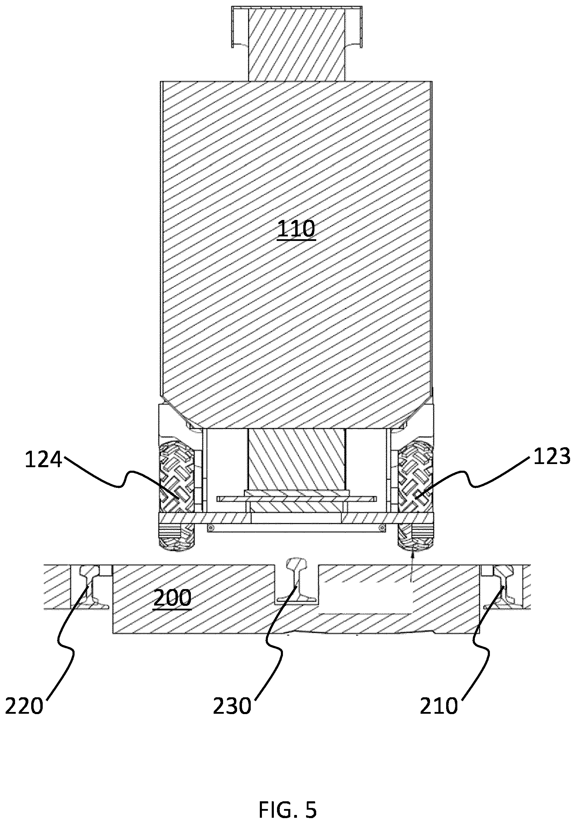

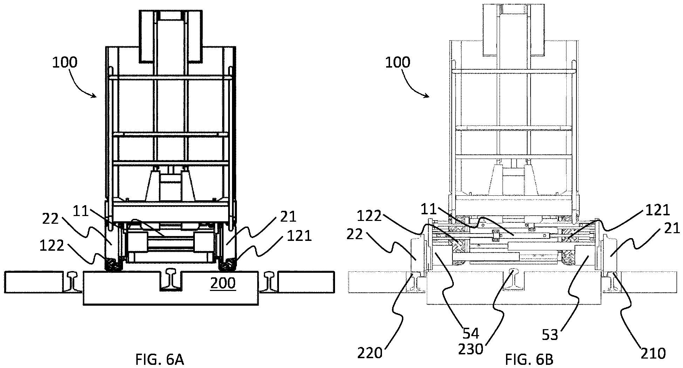

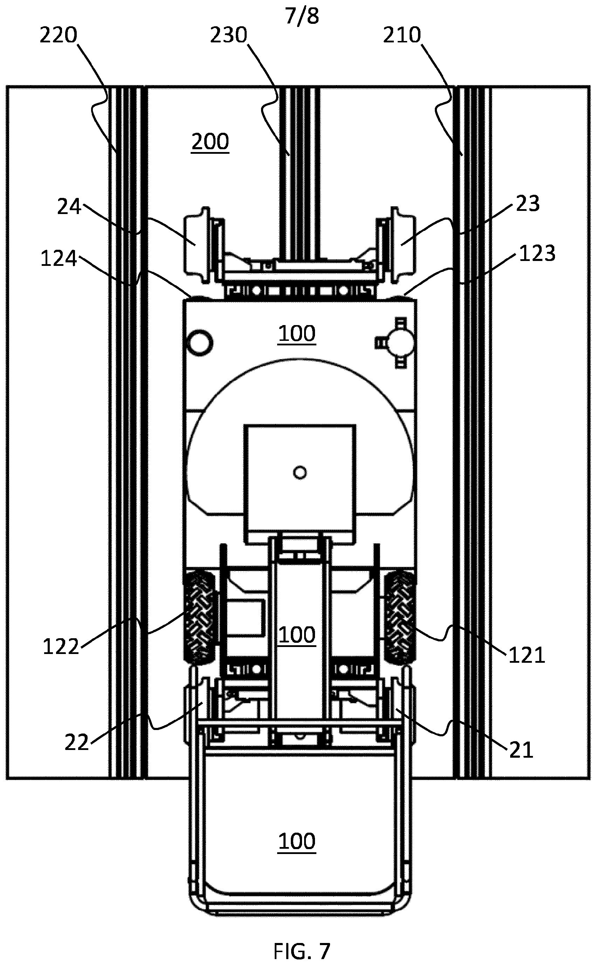

FIGs. 3-7 illustrate a vehicle 100 installed with two wheel mounts (11-12). The vehicle includes four road wheels (121-124) and four track wheels (21-24), with the track wheels (21-24) being mounted to the wheel mounts (11-12). A front wheel mount 11 is shown installed with two front track wheels (21, 22). A rear wheel mount 12 is shown installed with two rear track wheels (23, 24). The road wheels (121-124) may be installed with tyres, for example comprising rubber.
- FIGs. 3A, 4A, 5, 6A and 7 show the track wheels arranged in the road mode, for which the wheels are raised and retracted. The vehicle is shown positioned above the rails (but standing on concrete) ready for rail deployment.
- FIGs. 3B, 4B and 6B show the track wheels arranged in the rail mode, for which the wheels are extended and lowered. The vehicle is shown positioned with the wheels on the tracks, with the drive transferred to the rail wheels.

In the illustrated example, the front wheel mount 11 is installed with drive motors (53, 54) for each of the track wheels (21, 22), and the rear wheel mount 12 is not installed with drive motors. When the drive motors (53, 54) of the wheel mount 11 are activated in step S14, the drive motors of the vehicle 100 are deactivated which prevents the road wheels (121-124) from operating. When the drive motors (53, 54) of the wheel mount 11 are deactivated in step S22, the drive motors of the vehicle 100 are activated which allows the road wheels (121-124) to resume operating.

The vehicle 100 is shown on a road surface 200. This road surface 200 includes a railway track, which includes rails (210, 220), as well as a third rail 230 which is used to provide electrical power to some rail vehicles. A road surface 200 that includes tracks (210, 220) is used for the purpose of changing between road mode and rail mode. The wheel mounts (11, 12) are calibrated so that the wheels (21-24) when deployed are extended to a width that corresponds to the gauge of the railway tracks (210, 220). In principle it is possible for the wheel mounts to be calibrated for deployment with different gauges of railway tracks (210, 220), which can be achieved by allowing the wheels (21-24) can be extended by various amounts.

In the example shown, the vehicle is a MEWP (mobile elevating work platform) 100. The MEWP 100 includes a vehicle body 110, a chassis 120, an arm 130, and a platform 140. The body 110 houses rechargeable batteries which serve as the energy source for the vehicle 100. The arm 130 allows the platform 140 to be elevated. The chassis 120 has been installed with the front track wheels 11 and the rear track wheels 12. Other types of vehicles can be configured to have a road mode and a track mode by installing the wheel mounts (11, 12), such as cranes, excavators, cherry pickers, dumper trucks, and forklifts.

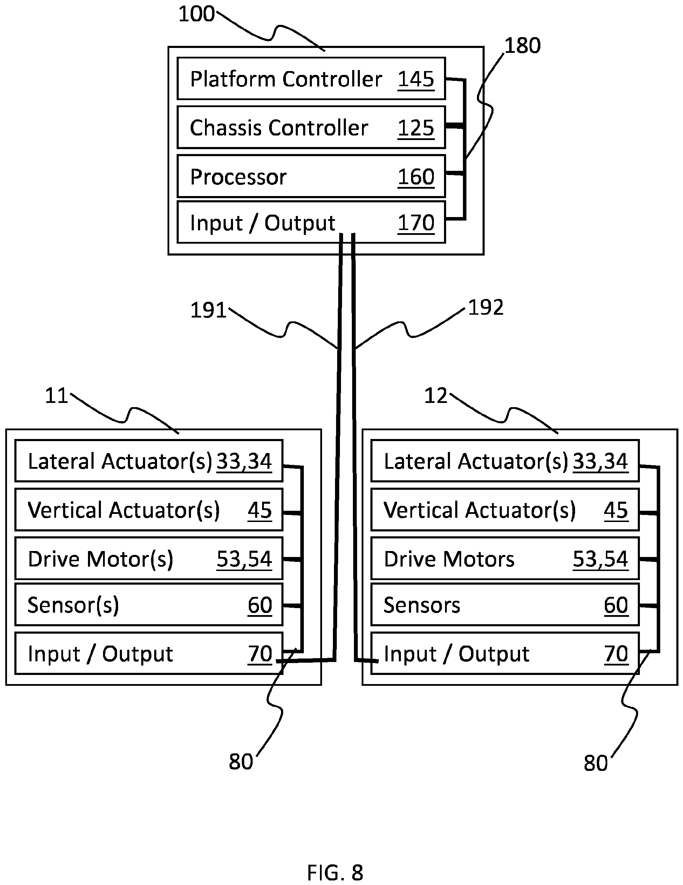

FIG. 8 illustrates connections between electronic components of the vehicle 100 and wheel mounts (11, 12). The vehicle 100 can control operation of the wheel mounts (11, 12) via cable connections (191, 192). The vehicle 100 includes a platform controller 145, a chassis controller 125, a processor 160, and an input/output 170, with these electronic components being connected by a bus 180. Each of the wheel mounts (11, 12) includes a number of lateral actuators (33, 34), a number of vertical actuators 45, a number of drive motors (53, 54), a number of sensors 60, and an input / output device 70, with these electronic components being arranged to communicate via a bus 80.

The controller 145 may be provided in the platform 140 and another controller 125 may be provided on the chassis 120. The user can input instructions into one of these controllers (145, 125), to control operation of the vehicle, including the track wheels (21-24) which are installed by the wheel mounts (11, 12). Thus, the vehicle 100 may be controlled from either the platform 140 or the chassis 120. The processor 160 of the vehicle receives commands that are input into the platform controller 145 or the chassis controller 125. The processor 160 is configured to communicate with the wheel mounts (11, 12) via the input/output device 170.

The input/output 70 of each of the wheel mounts (11, 12) is configured to receive command instructions that are transmitted by the vehicle via the cable connections (191, 192). These command instructions are issued to the actuators (33, 34, 45) and the drive motors (53, 54). Thus, each wheel mount (11, 12) is configured to receive signals to deploy or stow the wheels. Each wheel mount (11, 12) is configured to receive signals to activate / deactivate the drive motors, as well as instructions of the amount of torque that is to be provided to the wheels. The drive motors are three-phase motors, and so each of the drive motors receives three signals from the vehicle. The wheel mounts (11, 12) may include sensors 60, which transmit data to the vehicle 100 via the cable connections (191, 192).

The processor 160 of the vehicle 100 is installed with software, which when implemented allows the vehicle 100 to control the operation of the wheel mounts (11, 12). The software controls the actuators (33, 34, 45) and the drive motors (53, 54). This allows the wheels to transition between the road mode and the rail mode. This can be achieved by the software implementing processes illustrated by the flowcharts provided by FIGs. 2A and 2B.

The disclosed examples can be realised by a computer of a system or apparatus. These examples can be implemented by any device configured to execute instructions, or any dedicated hardware that is capable of carrying out all or a portion of the functionality. Disclosure is provided of hardware (e.g., a processor such as a central processing unit (CPU) or a microprocessor unit (MPU)) configured to read out and executes a program recorded on a memory device to perform the functions of the disclosed examples. For this purpose, the program is provided to the computer for example via a network or from a recording medium of various types serving as the memory device (e.g., a computer-readable medium such as a non-transitory computer-readable medium). The steps of the disclosed methods may be performed in any suitable order, or simultaneously where possible.

Although the disclosed subject matter has been described using specific terminology relating to apparatus features and/or method features, it is to be understood that the claimed subject matter is not necessarily limited to the examples disclosed. The scope of the following claims is to be accorded the broadest interpretation so as to encompass all such modifications and equivalent structures and functions. The advantages disclosed may relate to several of the examples that are disclosed.

### Clauses

The following clauses form part of the description, and correspond to the claims as filed of the priority application GB2310226.2, which provides a priority date of 4 July 2023.
1. A wheel mount (11; 12) configured to move one or more wheel (21, 22; 23, 24) between a stowed arrangement and a deployed arrangement, the wheel mount (11; 12) comprising:
   one or more lateral guide (31, 32) configured to guide the one or more wheel (21, 22; 23, 24) laterally; and
   one or more vertical guide (40) configured to guide the one or more wheel (21, 22; 23, 24) vertically.
2. The wheel mount (11; 12) according to clause 1, wherein:
   the wheel mount (11; 12) is configured to move a first wheel (21; 23) and a second wheel (22; 24) between the stowed arrangement and the deployed arrangement.
3. The wheel mount (11; 12) according to clause 2, further comprising:
   a first lateral guide (31) configured to guide the first wheel (21; 23) laterally; and
   a second lateral guide (32) configured to guide the second wheel (22; 24) laterally.
4. The wheel mount (11; 12) according to clause 2 or clause 3, wherein:
   a single vertical guide (40) is configured to guide both the first wheel (21; 23) and the second wheel (22; 24).
5. The wheel mount (11; 12) according to any preceding clause, further comprising:
   one or more lateral actuator (33, 34) configured to move the one or more wheel (21, 22) between a retracted arrangement and an extended arrangement.
6. The wheel mount (11; 12) according to any preceding clause, further comprising:
   one or more vertical actuator (45) configured to move the one or more wheel (21, 22) between a raised arrangement and a lowered arrangement.
7. The wheel mount (11) according to any preceding clause, further comprising:
   a support (51, 52) configured to be installed with a drive motor (53, 54) which during use supplies the wheel (21, 22) with rotational energy.
8. The wheel mount (11; 12) according to any preceding clause, further comprising:
   an input / output device (70) configured to receive a signal to control operation of an actuator (33, 34, 45) or a drive motor (53, 54) which has been installed to the wheel mount (11; 12).
9. The wheel mount (11; 12) according to any preceding clause, wherein:
   the one or more lateral guide (31, 32) is calibrated to guide the one or more wheel (21, 22; 23, 24) to one or more selected gauge width.
10. The wheel mount (11; 12) according to any preceding clause, wherein the wheel mount (11; 12) is configured to be retrofitted to a vehicle (100).
11. A vehicle (100) comprising one or more wheel mount (11; 12) according to any preceding clause.
12. The vehicle (100) according to clause 11, wherein the vehicle (100) further comprises:
   a first wheel mount (11) at the front of the vehicle; and
   a second wheel mount (12) at the rear of the vehicle.
13. The vehicle (100) according to clause 11 or clause 12, wherein the vehicle (100) further comprises:
   a controller (125, 145) configured to control operation of the one or more wheel mount (11; 12).
14. A method (S10; S20) of controlling a wheel mount (11; 12) configured to move one or more wheel (21, 22; 23, 24) between a stowed arrangement and a deployed arrangement, the method (S10; S20) comprising:
   laterally guiding (S12; S24) the one or more wheel (21, 22; 23, 24), via one or more lateral guide (31, 32); and
   vertically guiding (S13; S23) the one or more wheel (21, 22; 23, 24), via one or more vertical guide (40).
15. A program, which when executed by a computer, causes the computer to control a wheel mount (11; 12) according to any of clauses 1 to 10.
16. A computer-readable storage medium storing a program according to clause 15.

## Claims

1. A wheel mount (11; 12) for a road-rail vehicle (100), the wheel mount (11; 12) configured to move one or more wheel (21, 22; 23, 24) between a stowed arrangement and a deployed arrangement, the wheel mount (11; 12) comprising:
one or more lateral guide (31, 32) configured to guide the one or more wheel (21, 22; 23, 24) laterally, wherein each lateral guide (31, 32) is offset from an axis of rotation of the wheel (21, 22; 23, 24); and
one or more vertical guide (40) configured to guide the one or more wheel (21, 22; 23, 24) vertically.

2. The wheel mount (11; 12) according to claim 1, wherein:
the wheel mount (11; 12) is configured to move a first wheel (21; 23) and a second wheel (22; 24) between the stowed arrangement and the deployed arrangement.

3. The wheel mount (11; 12) according to claim 2, further comprising:
a first lateral guide (31) configured to guide the first wheel (21; 23) laterally; and
a second lateral guide (32) configured to guide the second wheel (22; 24) laterally.

4. The wheel mount (11; 12) according to claim 2 or claim 3, wherein:
a single vertical guide (40) is configured to guide both the first wheel (21; 23) and the second wheel (22; 24).

5. The wheel mount (11; 12) according to any preceding claim, further comprising:
one or more lateral actuator (33, 34) configured to move the one or more wheel (21, 22) between a retracted arrangement and an extended arrangement.

6. The wheel mount (11; 12) according to any preceding claim, further comprising:
one or more vertical actuator (45) configured to move the one or more wheel (21, 22) between a raised arrangement and a lowered arrangement.

7. The wheel mount (11) according to any preceding claim, further comprising:
a support (51, 52) configured to be installed with a drive motor (53, 54) which during use supplies the wheel (21, 22) with rotational energy.

8. The wheel mount (11; 12) according to any preceding claim, further comprising:
an input / output device (70) configured to receive a signal to control operation of an actuator (33, 34, 45) or a drive motor (53, 54) which has been installed to the wheel mount (11; 12).

9. The wheel mount (11; 12) according to any preceding claim, wherein:
the one or more lateral guide (31, 32) is calibrated to guide the one or more wheel (21, 22; 23, 24) to one or more selected gauge width.

10. The wheel mount (11; 12) according to any preceding claim, wherein the wheel mount (11; 12) is configured to be retrofitted to a vehicle (100).

11. A vehicle (100) comprising one or more wheel mount (11; 12) according to any preceding claim; optionally, wherein the vehicle (100) comprises:
a first wheel mount (11) at the front of the vehicle; and
a second wheel mount (12) at the rear of the vehicle.

12. The vehicle (100) according to claim 11, wherein the vehicle (100) further comprises:
a controller (125, 145) configured to control operation of the one or more wheel mount (11; 12).

13. A method (S10; S20) of controlling a wheel mount (11; 12) for a road-rail vehicle (100), the method (S10; S20) configured to move one or more wheel (21, 22; 23, 24) between a stowed arrangement and a deployed arrangement, the method (S10; S20) comprising:
laterally guiding (S12; S24) the one or more wheel (21, 22; 23, 24), via one or more lateral guide (31, 32), wherein each lateral guide (31, 32) is offset from an axis of rotation of the wheel (21, 22; 23, 24); and
vertically guiding (S13; S23) the one or more wheel (21, 22; 23, 24), via one or more vertical guide (40).

14. A program, which when executed by a computer, causes the computer to control a wheel mount (11; 12) according to any of claims 1 to 10.

15. A computer-readable storage medium storing a program according to claim 14.
